# EUROPEAN PATENT APPLICATION

(11) **EP 2 716 708 A1**
(43) Date of publication of application: **09.04.2014**
(21) Application number: 12792347.2
(22) Date of filing: 21.05.2012
(51) Int. Cl.: C08L 61/06, C08K 7/06, C08L 79/08, C08L 81/06, F04C 18/02, F04C 29/00

(54) **MOLDING MATERIAL**

(30) Priority: 31.05.2011 JP 2011121343
(71) Applicant: Sumitomo Bakelite Company Limited, Shinagawa-ku Tokyo 140-0002 (JP)
(72) Inventor: NISHIMURA, Masaaki, Tokyo 140-0002 (JP); VAN THIENEN, Tinneke, B 9000 Gent (BE); DE MUYNCK, Mathias, B 9000 Gent (BE)
(74) Representative: Müller, Christian Stefan Gerd
(86) International application number: PCT/JP2012/003299
(87) International publication number: WO 2012/164861

(57) **Abstract**

The present invention has an objective to provide a molding material which has the improved specific strength and specific elastic modulus and which has excellent molding properties.

According to the present invention, a molding material including a phenolic resin, carbon fibers, and a polyethersulfone and/or a polyetherimide is provided.

## Description

### TECHNICAL FIELD

The present invention relates to a molding material.

### BACKGROUND ART

In recent years, from the viewpoint of cost reduction, light weight of materials such as molded articles, and molded parts, there have been attempts to substitute metal materials that are used in the molded articles in the related art with resin materials. In the attempts, various resins are investigated and they are used as materials for the molded articles and molded parts in which metals have been used in the related art. As a resin material used as the molding material, carbon-resin composite materials including carbon fibers and phenolic resins have been proposed (for example, Patent Document 1).

On the other hand, in the key industrial fields such as an automotive field, an electric field, and an electronic field, phenolic resin molding materials having excellent heat resistance, dimensional stability, moldability, and the like are used. In particular, the intensive research on alternative materials have been made from a viewpoint that a significant reduction in cost can be achieved if glass fiber-reinforced phenolic resins is used as an alternative to metallic component materials (for example, Patent Document 2).

Further, in the automotive field, glass fiber-reinforced phenolic resins are used in place of metallic materials in the related art in order to improve the fuel efficiency of automobiles in the automotive scroll compressor. Specifically, according to life cycle assessment (LCA) of an automotive scroll compressor, carbon dioxide emissions are mainly generated during vehicle running, and an improvement in fuel efficiency is required in order to reduce the carbon dioxide emissions. Further, an improvement in the fuel efficiency of the automobiles is required in order to reduce the carbon dioxide emissions. Therefore, there has been researches to replace metal parts used in the scroll compressors of automobiles with resin-made parts to achieve a reduction in the weights, and as such, the resins, in particular, glass fiber-reinforced phenolic resins are used (For example, Patent Document 3).

However, the glass fiber-reinforced phenolic resin molding materials that are currently used may have insufficient strength and elastic modulus in some cases, when used as a material for automotive scroll compressors, a phenolic resin molding material that has characters such as bending strength, bending elastic modulus, and toughness enough for the use as a molding material for a scroll compressor is desired.

### RELATED DOCUMENT

### PATENT DOCUMENT

[Patent Document 1] Japanese Patent No. 3915045
[Patent Document 2] Japanese Unexamined Patent Publication No. 2005-281364
[Patent Document 3] Japanese Unexamined Patent Publication No. 2000-169669

### DISCLOSURE OF THE INVENTION

The present invention has been made in light of such circumstances, and thus, provides a molding material which has the improved specific strength and specific elastic modulus and which has excellent molding properties. Furthermore, the present invention provides a molding material which has the improved specific strength and specific elastic modulus, that are sufficient for the use as, for example, a material for an automotive scroll compressor, and which has excellent molding properties.

According to the present invention, for solving the above-described problems, a molding material including a phenolic resin, carbon fibers, and a polyethersulfone and/or a polyetherimide are provided.

According to one embodiment of the present invention, the phenolic resin in the molding material is at least one selected from the group consisting of a novolak type phenolic resin, a resole type phenolic resin, and an arylalkylene type phenolic resin.

According to one embodiment of the present invention, the carbon fibers in the molding material are pitch-based or PAN-based carbon fibers.

According to one embodiment of the present invention, the polyethersulfone resin in the molding material has a structure represented by the formula (1).

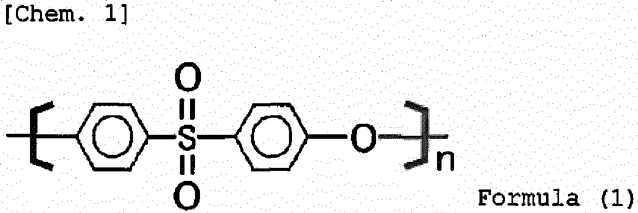

(in the formula (1), n is an integer of 1 or more).

According to one embodiment of the present invention, the polyetherimide resin in the molding material has a structure represented by the formula (2).

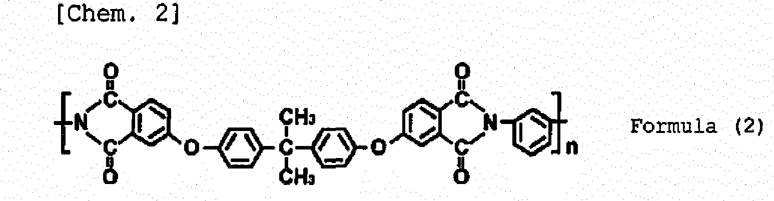

(in the formula (2), n is an integer of 1 or more)

In one embodiment of the present invention, the amount of the phenolic resin is equal to or more than 25% by weight and equal to or less than 64% by weight, based on the total weight of the molding material.

According to one embodiment of the present invention, the amount of the carbon fibers in the molding material is equal to or more than 20% by weight and equal to or less than 60% by weight, based on the total weight of the molding material.

According to one embodiment of the present invention, in the molding material, the amount of the polyethersulfone is equal to or more than 0.1% by weight and equal to or less than 20% by weight, based on the total weight of the molding material.

According to the present invention, a molding material which has the improved specific strength and specific elastic modulus and which has excellent molding properties is provided.

### DESCRIPTION OF EMBODIMENTS

The molding material of the present invention will be described. Further, "(a numerical value) to (a numerical value) " denotes a range equal to or more than (a numerical values) and equal to or less than (a numerical value) unless otherwise specified.

The molding material according to the present invention includes a phenolic resin, carbon fibers, and a polyethersulfone or a polyetherimide.

Examples of the phenolic resin used in the present invention include a novolak type phenolic resin, a resole type phenolic resin, and an arylalkylene type phenolic resin.

The novolak type phenolic resin used in the present invention can be obtained by reacting a phenol with an aldehyde under an acidic catalyst.

Examples of the phenol used for the preparation of the novolak type phenolic resin include phenol, cresol, xylenol, ethylphenol, p-phenylphenol, p-tert-butylphenol, p-tert-amylphenol, p-octylphenol, p-nonylphenol, p-cumylphenol, bisphenol A, bisphenol F, and resorcinol. These may be used singly or in combination of two or more kinds thereof.

Examples of the aldehyde used for the preparation of the novolak type phenolic resin include alkylaldehydes such as formaldehyde, acetaldehyde, propylaldehyde, and butylaldehyde; and aromatic aldehydes such as benzaldehyde and salicylaldehyde. Examples of a source for the formaldehyde include formalin (aqueous solution), paraformaldehyde, hemi-formal with an alcohol, and trioxane. These may be used singly or in combination of two or more kinds thereof.

In the synthesis of a novolak type phenolic resin, the reaction molar ratio of the aldehyde to the phenol is usually from 0.3 moles to 1.0 mole, and particularly from 0.6 moles to 0.9 moles, based on one mole of the phenol.

Examples of the acidic catalyst include organic carboxylic acids such as oxalic acid and acetic acid; organic sulfonic acids such as benzenesulfonic acid, paratoluenesulfonic acid, and methanesulfonic acid; organic phosphonic acids such as 1-hydroxyethylidene-1,1-diphosphonic acid and 2-phosphonobutane-1,2,4-tricarboxylic acid; and inorganic acids such as hydrochloric acid, sulfuric acid, and phosphoric acid. Further, these acidic catalysts may be used singly or in combination of two or more kinds thereof.

The resole type phenolic resin used in the present invention is obtained by reacting a phenol with an aldehyde.

Examples of the phenol used for the preparation of the resole type phenolic resin of the present invention include cresols such as phenol, o-cresol, m-cresol, and p-cresol; xylenols such as 2,3-xylenol, 2,4-xylenol, 2,5-xylenol, 2,6-xylenol, 3,4-xylenol, and 3,5-xylenol; ethylphenols such as o-ethylphenol, m-ethylphenol, and p-ethylphenol; butylphenols such as isopropylphenol, butylphenol, and p-tert-butylphenol; alkylphenols such as p-tert-amylphenol, p-octylphenol, p-nonylphenol, and p-cumylphenol; halogenated phenols such as fluorophenol, chlorophenol, bromophenol, and iodophenol; a substituted monohydric phenols such as p-phenylphenol, aminophenol, nitrophenol, dinitrophenol, and trinitrophenol; monohydric phenols such as 1-naphthol and 2-naphthol; and polyhydric phenols such as resorcin, alkylresorcin, pyrogallol, catechol, alkylcatechol, hydroquinone, alkylhydroquinone, phloroglucin, bisphenol A, bisphenol F, bisphenol S, and dihydroxynaphthalene. These compounds may be used singly or as a mixture of two or more kinds thereof. Among these phenols, ones selected from phenol, cresoles, and bisphenol A, which are economically beneficial, are preferred.

Examples of the aldehyde used for the preparation of the resole type phenolic resin of the present invention include formaldehyde, paraformaldehyde, trioxane, acetaldehyde, propionaldehyde, polyoxymethylene, chloral, hexamethylenetetramine, furfural, glyoxal, n-butylaldehyde, caproaldehyde, allylaldehyde, benzaldehyde, crotonaldehyde, acrolein, tetraoxymethylene, phenylacetaldehyde, o-tolualdehyde, and salicylaldehyde. These may be used singly or in combination of two or more kinds thereof. Among these aldehydes, ones selected from formaldehyde and paraformaldehyde, which are excellent in reactivity and inexpensive, are preferred.

Examples of the method for synthesizing the resole type phenolic resin used in the present invention include a method in which the phenol is reacted with the aldehyde in the presence of a catalyst such as alkali metals, amines, and divalent metal salts.

Examples of the catalyst used in the synthesis of the resole type phenolic resin used in the present invention include a hydroxide of an alkali metal, such as sodium hydroxide, lithium hydroxide, and potassium hydroxide; an oxide or hydroxide of an alkaline earth metal, such as calcium, magnesium, and barium; sodium carbonate; aqueous ammonia; an amine such as triethylamine and hexamethylenetetramine; and a divalent metal salt such as magnesium acetate and zinc acetate. These may be used singly or in combination of two or more kinds thereof.

In the synthesis of the resole type phenol resin, the reaction molar ratio of the aldehyde to the phenol is preferably from 0.80 moles to 2.50 moles, and more preferably from 1.00 moles to 2.30 moles, based on one mole of the phenol. If the molar ratio is less than the lower limit, the resole type resin may not be obtained in some cases, whereas if the molar ratio is greater than the upper limit, it may be difficult to control the reaction in some cases.

The arylalkylene type phenolic resin used in the present invention refers to an epoxy resin having one or more arylalkylene groups in the repeating unit. Examples of the arylalkylene type phenolic resin include a xylene type epoxy resin and a biphenyldimethylene type epoxy resin. Among these, a biphenyldimethylene type epoxy resin is preferred.

The carbon fibers used in the present invention are pitch-based carbon fibers or PAN-based carbon fibers. These carbon fibers may be used singly or in combination of two more kinds thereof. The shape of the carbon fibers used is not particularly limited, but is preferably circular in view of the strength. The fiber length of the carbon fibers used is preferably equal to or more than 5 µm and equal to or less than 13 µm, and more preferably equal to or more than 6 µm and equal to or less than 10 µm.

As the polyethersulfone used in the present invention, ones that are generally commercially available may be used. The polyethersulfone preferably includes a repeating unit represented by the following formula (1).

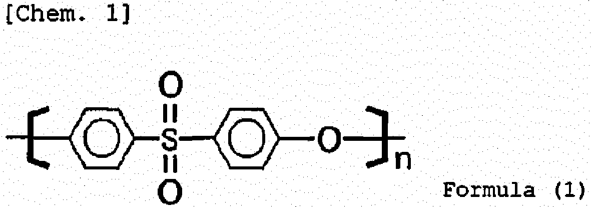

In the formula (1), n is an integer of 1 or more, preferably equal to or more than 1 and equal to or less than 500, and more preferably equal to or more than 100 and equal to or less than 300.

As the polyetherimide used in the present invention, ones having a structure represented by the formula (2), which are generally used in the field, can be used.

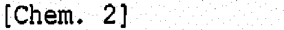

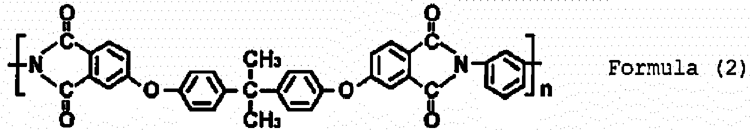

(in the formula (2), n is an integer of 1 or more).

The polyethersulfone and the polyetherimide may be used singly or in combination thereof.

The weight of the phenolic resin is preferably equal to or more than 25% by weight and equal to or less than 64% by weight, more preferably equal to or more than 30% by weight and equal to or less than 60% by weight, and even preferably equal to or more than 35% by weight and equal to or less than 50% by weight, based on the total weight of the molding material. If the weight of the phenolic resin is greater than the upper limit, the swelling of the obtained molding article may be generated in some cases, where if the weight of the phenolic resin is less than the lower limit, it takes time for curing, and thus the curing may be insufficient in some cases. Further, by adopting a weight of the phenolic resin based on the total weight of the molding material ranging equal to or more than 30.5% by weight and equal to or less than 55% by weight, a specific strength and a specific elastic modulus, which are enough for the use in a scroll, can be obtained.

The weight of the carbon fibers based on the total weight of the molding material is preferably equal to or more than 20% by weight and equal to or less than 60% by weight, and more preferably equal to or more than 40% by weight and equal to or less than 55% by weight. If the weight of the carbon fibers is greater than the upper limit, the surface state of the obtained molding article may be deteriorated in some cases and further, the molding processibility or the fluidity may be deteriorated in some cases, whereas if the weight of the carbon fibers is less than the lower limit, the mechanical properties such as a strength and an elastic modulus, of the obtained molding article, are not excellent in some cases. In addition, in the case in which the molding material is used as a scroll molding article, the weight of the carbon fibers based on the total weight of the molding material is preferably equal to or more than 35% by weight and equal to or less than 55% by weight. Within the ranges, a specific strength and a specific elastic modulus, which are enough for the use in a scroll, can be obtained.

In the case of using the polyethersulfone, the weight of the polyethersulfone based on the total weight of the molding material is preferably equal to or more than 0.1% by weight and equal to or less than 20% by weight, and more preferably equal to or more than 2% by weight and equal to or less than 8% by weight. Within the ranges, the obtained molding article can have an excellent specific strength and an excellent specific elastic modulus. Further, in the case where the molding material is used as a scroll molding article, the weight of the polyethersulfone based on the total weight of the molding material is preferably equal to or more than 0.5% by weight and equal to or less than 15% by weight. Within the ranges, a specific strength and a specific elastic modulus, which are enough for the use in a scroll, can be obtained.

The molding material of the present invention may further include components such as a releasing agent, a lubricant, a curing accelerator, a pigment, an inorganic filler, an elastomer, and a glass fibers, as desired.

As the inorganic filler, silicates such as talc, calcined clay, uncalcined clay, and mica; oxides such as titanium oxide, alumina, silica, and fused silica; carbonates such as calcium carbonate, magnesium carbonate, and hydrotalcite; hydroxides such as aluminum hydroxide, magnesium hydroxide, and calcium hydroxide; sulfates or sulfites such as barium sulfate, calcium sulfate, and calcium sulfite; borates such as zinc borate, barium metaborate, aluminum borate, calcium borate, and sodium borate; nitrides such as aluminum nitride, boron nitride, and silicon nitride; and glass fibers are preferred. Among these, glass fibers are preferred. If the glass fibers are used, particularly, the mechanical strength of the obtained molding article can be maintained.

The glass constituting the glass fibers is not particularly limited, but examples thereof include E glass, C glass, A glass, S glass, D glass, NE glass, T glass, and H glass. Among these, E glass, T glass, or S glass is preferred, whereby the glass fibers can obtain high elasticity and a small thermal expansion coefficient.

Examples of the elastomer include an acrylic acid-alkylstyrene copolymer, vinyl polyacetate, a styrene-isoprene copolymer, an acrylonitrile-butadiene copolymer, isoprene rubber, a styrene-butadiene copolymer, an ether-urethane copolymer, a methyl-urethane copolymer, an ester-urethane copolymer, a vinyl-silicone copolymer, a phenyl-silicone copolymer, and a chloroprene copolymer. In particular, the acrylic acid-alkylstyrene copolymer, the acrylonitrile-butadiene polymer, and the like, which have a wide range of applications and easy handling, are preferably used.

The method for preparing the molding material of the present invention is not particularly limited, but the molding material is prepared by mixing the components, and kneading the mixture under heating and melting by a pressure kneader, a twin screw extruder, a heating roll, or the like, and grinding the product by a power mill or the like. Further, the molding material thus obtained can be subjected to injection molding, transfer molding, compression molding, or the like, whereby a molding article having a desired shape can be obtained.

### [Examples]

Hereinafter, the present invention will be described with reference to Examples.

### (Example 1)

A raw material mixture formed by blending 43.3% by weight of a novolak type phenolic resin, 46.5% by weight of carbon fibers, 0.1% by weight of polyethersulfone, and 7.1% by weight of hexamethylenetetramine as a curing agent, 1% by weight of magnesium oxide as a curing accelerator, 1% by weight of a releasing agent, and 1% by weight of a colorant, based on the entire molding material, was melt-kneaded for 3 minute by a heating roll at 90°C, taken out, ground, and granulated to obtain a molding material.

The tensile strength, the tensile elastic modulus, and the loss factor of the molding article obtained by injection molding were measured in accordance with the methods described in "Evaluation Method". The results are shown in Table 1.

### (Evaluation Method)

Using the molding materials obtained in Examples and Comparative Examples, specimens were prepared by injection molding. As the molding conditions, the mold temperature was 175°C and the curing time was 1, minute.

The obtained specimen was treated under an atmosphere at 180°C for 6 hours, and the tensile strength (ambient temperature), the tensile elastic modulus (ambient temperature), and the loss factor (ambient temperature) were measured in accordance with JIS K 6911 "Thermosetting Plastic General Test Method".

Furthermore, as the evaluation results of the scroll molding articles in Table 1, "A" denotes that the scroll molding articles are suitable for a scroll; "B" denotes that the scroll molding articles are suitable for general-purpose articles; and "C" denotes that the scroll molding articles are not suitable for anything, in the evaluations.

### (Examples 2 to 23 and Comparative Examples 1 to 2)

A molding material was obtained using the components shown in Table 1 by the same method as in Example 1. Further, the amounts of the components shown in Table 1 are all % by weight. In addition, as the components described in Table 1, the following ones were used.

(1) Phenolic resin (novolak type phenolic resin): PR-HF-3 manufactured by Sumitomo Bakelite Co., Ltd.
(2) Carbon fibers (PAN-based) : HT C261 6mm manufactured by Toho Tenax Co., Ltd.
(3) Carbon fibers (pitch-based): DIALEAD K223SE manufactured by Mitsubishi Plastics, Inc.
(4) Glass fibers: E glass fibers manufactured by Nitto Boseki Co., Ltd.
(5) PES-1 (polyethersulfone) : 5003PS manufactured by Sumitomo Chemical Co., Ltd.
(6) PES-2 (polyethersulfone): 4800P manufactured by Sumitomo Chemical Co., Ltd.
(7) PEI-1 (polyetherimide): Ultem1000 manufactured by SABIC Innovative Plastics Holding IP BV
(8) PEI-2 (polyetherimide): Item1040A manufactured by SABIC Innovative Plastics Holding IP BV
(9) Curing agent (hexamethylenetetramine): Urotropine manufactured by Sumitomo Seika Chemicals Co., Ltd.
(10) Curing accelerator: magnesium oxide
(11) Releasing agent: calcium stearate
(12) Colorant: carbon black

The results are summarized in Tables below.

**[Table 1]**

| | Example 1 | Example 2 | Example 3 | Example 4 | Example 5 |
|---|---|---|---|---|---|
| Phenolic resin | 43.3 | 43.0 | 41.7 | 39.9 | 35.7 |
| Carbon fibers (PAN-based) | 46.5 | 46.5 | 46.5 | 46.5 | 46.5 |
| Carbon fibers (pitch-based) | | | | | |
| Glass fibers | | | | | |
| PES-1 | 0.1 | 0.5 | 2 | 4 | 9 |
| PES-2 | | | | | |
| PEI-1 | | | | | |
| PEI-2 | | | | | |
| Curing agent (hexamethylenetetramine) | 7.1 | 7.0 | 6.8 | 6.6 | 5.8 |
| Curing accelerator (magnesium oxide) | 1 | 1 | 1 | 1 | 1 |
| Releasing agent | 1 | 1 | 1 | 1 | 1 |
| Colorant | 1 | 1 | 1 | 1 | 1 |
| Tensile strength (ambient temperature) | 155 | 175 | 200 | 207 | 201 |
| Tensile elastic modulus (ambient temperature) | 30.0 | 30.5 | 32.0 | 33.5 | 33.0 |
| Loss factor (ambient temperature) | 0.009 | 0.009 | 0.009 | 0.009 | 0.009 |
| Evaluation results of scroll molding article | B | A | A | A | A |

**[Table 2]**

| | Example 6 | Example 7 | Example 8 | Example 9 | Example 10 |
|---|---|---|---|---|---|
| Phenolic resin | 30.5 | 26.2 | 39.9 | 43.3 | 43.0 |
| Carbon fibers (PAN-based) | 46.5 | 46.5 | 46.5 | 45.5 | 46.5 |
| Carbon fibers (pitch-based) | | | | | |
| Glass fibers | | | | | |
| PES-1 | 15 | 20 | | | |
| PES-2 | | | 4 | | |
| PEI-1 | | | | 0.1 | 0.5 |
| PEI-2 | | | | | |
| Curing agent (hexamethylenetetramine) | 5.0 | 4.3 | 6.6 | 7.1 | 7.0 |
| Curing accelerator (magnesium oxide) | 1 | 1 | 1 | 1 | 1 |
| Releasing agent | 1 | 1 | 1 | 1 | 1 |
| Colorant | 1 | 1 | 1 | 1 | 1 |
| Tensile strength (ambient temperature) | 170 | 155 | 205 | 152 | 172 |
| Tensile elastic modulus (ambient temperature) | 32.0 | 28.0 | 33.4 | 29.4 | 29.9 |
| Loss factor (ambient temperature) | 0.009 | 0.009 | 0.009 | 0.009 | 0.009 |
| Evaluation results of scroll molding article | A | B | A | B | A |

**[Table 3]**

| | Example 11 | Example 12 | Example 13 | Example 14 | Example 15 |
|---|---|---|---|---|---|
| Phenolic resin | 39.9 | 30.5 | 26.2 | 39.9 | 62.7 |
| Carbon fibers (PAN-based) | 46.5 | 46.5 | 46.5 | 46.5 | 20 |
| Carbon fibers (pitch-based) | | | | | |
| Glass fibers | | | | | |
| PES-1 | | | | | 4 |
| PES-2 | | | | | |
| PEI-1 | 4 | 15 | 20 | | |
| PEI-2 | | | | 4 | |
| Curing agent (hexamethylenetetramine) | 6.6 | 5.0 | 4.3 | 6.6 | 10.3 |
| Curing accelerator (magnesium oxide) | 1 | 1 | 1 | 1 | 1 |
| Releasing agent | 1 | 1 | 1 | 1 | 1 |
| Colorant | 1 | 1 | 1 | 1 | 1 |
| Tensile strength (ambient temperature) | 203 | 167 | 152 | 201 | 150 |
| Tensile elastic modulus (ambient temperature) | 32.8 | 31.4 | 27.4 | 32.4 | 20.5 |
| Loss factor (ambient temperature) | 0.009 | 0.009 | 0.009 | 0.009 | 0.021 |
| Evaluation results of scroll molding article | A | A | B | A | B |

**[Table 4]**

| | Example 16 | Example 17 | Example 18 | Example 19 | Example 20 |
|---|---|---|---|---|---|
| Phenolic resin | 49.8 | 32.6 | 28.4 | 39.9 | 30.0 |
| Carbon fibers (PAN-based) | 35 | 55 | 60 | | 58.1 |
| Carbon fibers (pitch-based) | | | | 46.5 | |
| Glass fibers | | | | | |
| PES-1 | 4 | 4 | 4 | 4 | 4 |
| PES-2 | | | | | |
| PEI-1 | | | | | |
| PEI-2 | | | | | |
| Curing agent (hexamethylenetetramine) | 8.2 | 5.4 | 4.6 | 6.6 | 4.9 |
| Curing accelerator (magnesium oxide) | 1 | 1 | 1 | 1 | 1 |
| Releasing agent | 1 | 1 | 1 | 1 | 1 |
| Colorant | 1 | 1 | 1 | 1 | 1 |
| Tensile strength (ambient temperature) | 174 | 171 | 152 | 195 | 155 |
| Tensile elastic modulus (ambient temperature) | 23.0 | 38.0 | 42.0 | 32.0 | 41.0 |
| Loss factor (ambient temperature) | 0.015 | 0.007 | 0.005 | 0.009 | 0.006 |
| Evaluation results of scroll molding article | A | A | B | A | B |

**[Table 5]**

| | Example 21 | Example 22 | Example 23 | Comparative Example 1 | Comparative Example 2 |
|---|---|---|---|---|---|
| Phenolic resin | 35.0 | 55.0 | 60.0 | 39.9 | 43.4 |
| Carbon fibers (PAN-based) | 52.3 | 29 | 23.2 | | 46.5 |
| Carbon fibers (pitch-based) | | | | | |
| Glass fibers | | | | 46.5 | |
| PES-1 | 4 | 4 | 4 | 4 | 0 |
| PES-2 | | | | | |
| PEI-1 | | | | | |
| PEI-2 | | | | | |
| Curing agent (hexamethylenetetramine) | 5.7 | 9.0 | 9.8 | 6.6 | 7.1 |
| Curing accelerator (magnesium oxide) | 1 | 1 | 1 | 1 | 1 |
| Releasing agent | 1 | 1 | 1 | 1 | 1 |
| Colorant | 1 | 1 | 1 | 1 | 1 |
| Tensile strength (ambient temperature) | 185 | 167 | 154 | 113 | 150 |
| Tensile elastic modulus (ambient temperature) | 36.0 | 22.5 | 21.5 | 20.0 | 30.0 |
| Loss factor (ambient temperature) | 0.007 | 0.017 | 0.019 | 0.009 | 0.009 |
| Evaluation results of scroll molding article | A | A | B | C | C |

This application claims priority based on Japanese Patent Application No. 2011-121343 filed on May 31, 2011, the disclosure of which is incorporated herein by reference in its entirety.

## Claims

1. A molding material comprising:
a phenolic resin;
carbon fibers; and
a polyethersulfone and/or a polyetherimide.

2. The molding material according to claim 1, wherein the phenolic resin is at least one selected from the group consisting of a novolak type phenolic resin, a resole type phenolic resin, and an arylalkylene type phenolic resin.

3. The molding material according to claim 1, wherein the carbon fibers are pitch-based or PAN-based carbon fibers.

4. The molding material according to claim 1, wherein the polyethersulfone has a structure represented by the formula (1) : 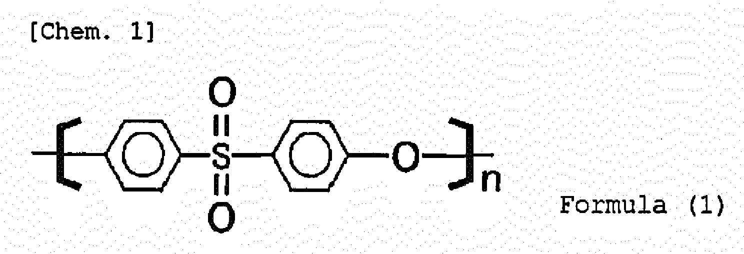 (in the formula (1), n is an integer of 1 or more).

5. The molding material according to claim 1, wherein the polyetherimide has a structure represented by the formula (2): 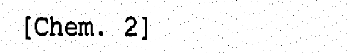 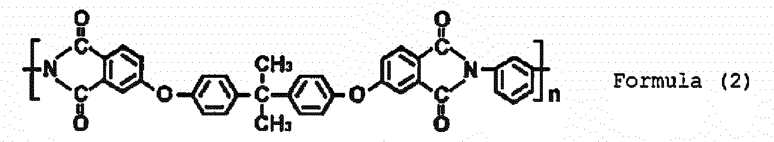 (in the formula (2), n is an integer of 1 or more).

6. The molding material according to claim 1, wherein the amount of the phenolic resin is equal to or more than 25% by weight and equal to or less than 64% by weight, based on the total weight of the molding material.

7. The molding material according to claim 1, wherein the amount of the carbon fibers is equal to or more than 20% by weight and equal to or less than 60% by weight, based on the total weight of the molding material.

8. The molding material according to claim 1, wherein the amount of the polyethersulfone is equal to or more than 0.1% by weight and equal to or less than 20% by weight, based on the total weight of the molding material.
